(19) Europäisches Patentamt
European Patent Office
Office européen des brevets

(11) **EP 4 280 303 A1**

(12) **EUROPEAN PATENT APPLICATION**

(43) Date of publication:
**22.11.2023 Bulletin 2023/47**

(21) Application number: **23173885.7**

(22) Date of filing: **17.05.2023**

(51) International Patent Classification (IPC):
**H01M 4/505** (2010.01)    **H01M 4/525** (2010.01)
**H01M 10/0525** (2010.01)    **H01M 10/0565** (2010.01)

(52) Cooperative Patent Classification (CPC):
**H01M 4/505; H01M 4/525; H01M 10/0525;
H01M 10/0565**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.05.2022 KR 20220060812**

(71) Applicants:
• **SK On Co., Ltd.**
**Seoul 03161 (KR)**
• **SK Innovation Co., Ltd.**
**Seoul 03188 (KR)**

(72) Inventors:
• **LEE, Sang Han**
**34124 Daejeon (KR)**
• **LEE, Ju Wook**
**34124 Daejeon (KR)**
• **LEE, Jong Hyuk**
**34124 Daejeon (KR)**
• **KIM, Jung Hwan**
**34124 Daejeon (KR)**
• **PARK, Soo Min**
**34124 Daejeon (KR)**
• **CHO, In Haeng**
**34124 Daejeon (KR)**
• **HA, Dong Wook**
**34124 Daejeon (KR)**

(74) Representative: **Prüfer & Partner mbB
Patentanwälte · Rechtsanwälte
Sohnckestraße 12
81479 München (DE)**

(54) **CATHODE FOR LITHIUM SECONDARY BATTERY, LITHIUM SECONDARY BATTERY AND METHOD OF PREPARING CATHODE ACTIVE MATERIAL FOR LITHIUM SECONDARY BATTERY**

(57)     A cathode (100) for a lithium secondary battery includes a cathode current collector, and a cathode active material layer (110) satisfying a specific formula formed on the cathode current collector (105). The cathode active material layer (110) includes lithium metal oxide particles that have a single-particle shape, and a single-crystalline structure or a poly-crystalline structure including two or more single crystals. A lithium secondary battery including the cathode (100), and a method of preparing a cathode active material are also provided.

## FIG. 1

**Description**

BACKGROUND

1. Field

The present disclosures relate to a cathode for a lithium secondary battery, a lithium secondary battery and a method of preparing a cathode active material for a lithium secondary battery.

2. Description of the Related Art

Secondary batteries which can be charged and discharged repeatedly have been widely employed as a power source of an electric vehicle, a mobile electronic device such as a camcorder, a mobile phone, a laptop computer, etc.

Lithium secondary batteries are actively developed and employed, in particular due to high operational voltage and energy density per unit weight, a high charging rate, a compact dimension, etc.

For example, such a lithium secondary battery may include an electrode assembly including a cathode, an anode and a separation layer interposed between the cathode and the anode, and an electrolyte solution immersing the electrode assembly.

For example, the cathode may include a cathode current collector and a cathode active material layer formed on the cathode current collector. The cathode active material layer may include lithium metal oxide particles as a cathode active material.

The lithium metal oxide particles generally have a secondary particle shape in which a plurality of primary particles are aggregated in a morphological aspect, and the primary particles generally have a polycrystalline structure in a crystallographic aspect.

However, cracks may occur in the lithium metal oxide particles having the secondary particle shape and the polycrystalline structure during a pressing process in a cathode manufacturing process. Additionally, cracks may occur in the particles due to intercalation and deintercalation of lithium during repetitive charging and discharging of the lithium secondary battery.

Accordingly, generation of gas due to a side reaction between the lithium metal oxide particles and the electrolyte solution may be caused, and life-span properties of the lithium secondary battery may be deteriorated. The above problems may be aggravated in high-temperature environment.

In KR 20210119905 A, nickel-cobalt-based lithium metal oxide particles having a single-particle shape are employed. However, there is need for further development, in particular in order to improve the stability (in particular the mechanical and/or chemical stability) of the cathode for a lithium secondary battery as well as stability (in particular the mechanical and/or chemical stability) of the whole lithium secondary battery, especially at higher temperatures, and preferably allowing for a good or improved discharge capacity and/or power properties at the same time.

In view of the above, it is an objective of the present disclosures to provide an improved cathode for a lithium secondary battery, in particular a cathode for an improved lithium secondary battery, an improved method for preparing a cathode active material for a lithium secondary battery, in particular a method for preparing an improved cathode active material, and an improved lithium secondary battery, in particular a lithium secondary battery having an improved mechanical and/or chemical stability.

This objective is achieved by the cathode according to claim 1, the lithium secondary battery according to claim 9, and the method of claim 10. Preferred or particular embodiments of the invention are defined in the dependent claims and described in the description below. The features defined in the dependent claims and described for various embodiments of the invention may be combined with each other wherever this is technically possible.

SUMMARY

According to an aspect of the present disclosures, there is provided a cathode for a lithium secondary battery having improved mechanical and chemical stability.

According to an aspect of the present disclosures, there is provided a lithium secondary battery having improved mechanical and chemical stability.

According to an aspect of the present disclosures, there is provided a method of preparing a cathode active material for a lithium secondary battery having improved mechanical and chemical stability.

The cathode for a lithium secondary battery according to the invention includes a cathode current collector and a cathode active material layer formed on the cathode current collector. The cathode active material layer includes lithium metal oxide particles that have

- a single-particle shape and
- a single-crystalline structure or a poly-crystalline structure, the latter including two or more single crystals.

The cathode active material layer satisfies Formula 1.

$$[\text{Formula 1}]$$

$$1 \ \mu m \leq S/N \leq 3 \ \mu m$$

In Formula 1, N is a total number of single crystals in which at least one of a major axis length and a minor axis length is 0.3 $\mu$m or more in a focused ion beam (FIB) analysis image of the cathode active material layer. In Formula 1, S is a total sum of crystal sizes of the single crystals in which at least one of the major axis length and the minor axis length is 0.3 $\mu$m or more measured from the FIB analysis image. Herein, the crystal size of the single crystal means an average value of the major axis length and the minor axis length measured from the FIB analysis image.

That is, if - in a FIB analysis image of the cathode active material layer in accordance with the present disclosures - the single crystals of the single-crystalline structure or the single crystals in the poly-crystalline structure of the lithium metal oxide particles having the single-particle shape are analyzed with respect to the length of the major axis ("major axis length") and the length of the minor axis ("minor axis length"), then the number N, which results from counting the single crystals having a major axis length of 0.3 $\mu$m or more (or a major axis length and a minor axis length both being 0.3 $\mu$m or more), and the sum S, which results from adding the crystal sizes of these N single crystals (i.e. the single crystals having a major axis length of 0.3 $\mu$m or more or both a major axis length and a minor axis length of 0.3 $\mu$m or more), have such values that Formula 1 is satisfied. In other words, the following is determined in the FIB image: First, how many single crystals (either single crystals forming a single crystal structure or single crystals being constituents of a poly-crystalline structure) have a major axis length of 0.3 $\mu$m or more. This gives the number N. Second, for each of these single crystals, the crystal size is determined. S is sum of these crystal sizes. By dividing S by N, the arithmetic average of the crystal sizes of these crystals is calculated. To be in accordance with the present disclosures, this arithmetic average satisfies Formula 1. Herein, a particle having the single-particle shape is a particle that is not aggregated with other particles to form a secondary particle. The length of the major axis of the single crystal in particular means the length of the longest line among straight lines having both end points at the contour/circumference of the single crystal in the FIB image. The length of the minor axis of the single crystal in particular means the length of the shortest line among straight lines having both end points at the contour/circumference of the single crystal in the FIM image and intersecting a central point of the major axis of the single crystal. This means that the major axis and the minor axis lie in the same plane, wherein the latter insects the former at a central point but not necessarily at a right angle.

The cathode for a lithium secondary battery according to the invention may have improved stability (in particular improved mechanical and/or chemical stability) and good discharge capacity and power properties.

In some embodiments, $1 \mu m \leq S/N \leq 2 \mu m$.

In some embodiments, in the FIB analysis image, a ratio of a total cross-sectional area of the single crystals in which at least one of the major axis length and the minor axis length is 0.3 $\mu$m or more relative to a total cross-sectional area of the lithium metal oxide particles may be 0.5 or more.

In some embodiments, the lithium metal oxide particles may include first lithium metal oxide particles having a shape of a single particle and a poly-crystalline structure, and second lithium metal oxide particles having a shape of a single particle and a single-crystalline structure.

In some embodiments which involve such first and second lithium metal oxide particles, in the FIB analysis image, a ratio of the number of the second lithium metal oxide particles relative to the number of the first lithium metal oxide particles is in a range from 0.1 to 10.

In some embodiments, the lithium metal oxide particles may satisfy Formula 2.

$$[\text{Formula 2}]$$

$$9.8\% \geq 100 \times I(110)/\{I(110)+I(003)\}$$

In Formula 2, I(110) is a maximum height of a (110) plane peak in an X-ray diffraction (XRD) analysis spectrum measured for the lithium metal oxide particles, and I(003) is a maximum height of a (003) plane peak in the XRD analysis spectrum. Herein, Cu K-Alpha1 radiation may for instance be used for the XRD analysis.

In some embodiments, the lithium metal oxide particles may contain nickel (Ni).

In some embodiments, the cathode for a lithium secondary battery may satisfy Formula 3.

[Formula 3]

$$C \geq 140 + 0.738 \times Ni_C$$

In Formula 3, C is a numerical value of a discharge capacity expressed in a unit of mAh/g measured by charging under constant current and constant voltage conditions of 0.1C 4.3V 0.05C CUT-OFF, and discharging under conditions of 0.1C 3V CUT-OFF of a half-cell having a lithium counter electrode, and $Ni_C$ is a numerical value of mol% of nickel relative to a total number of moles of all elements except lithium and oxygen in the lithium metal oxide particles. For instance, if the capacity equals 200 mAh/g and the content of nickel is 80 mol% relative to a total number of moles of all elements except lithium and oxygen, then C=200 and $Ni_C$ =80.

The lithium secondary battery according to further embodiments of the invention includes the cathode for a lithium secondary battery according to the above-described embodiments, and an anode facing the cathode.

Such a lithium secondary battery may have improved stability (in particular improved mechanical and/or chemical stability) and good discharge capacity and power properties.

In the method of preparing a cathode active material for a lithium secondary battery according to the invention, a mixture of metal hydroxide particles and a lithium source is prepared. A first calcination of the mixture is performed at a first temperature. A second calcination of a product from the first calcination is performed at a second temperature lower than the first temperature.

By such a method, a cathode active material for a lithium secondary battery having improved stability (in particular improved mechanical and/or chemical stability) and good discharge capacity and power properties may be relatively degraded may be prepared.

In some embodiments, the first calcination and the second calcination may each be performed for 1 hour to 10 hours.

In some embodiments, the first temperature may be in a range from 900 °C to 1000 °C.

In some embodiments, the second temperature may be in a range from 600 °C to 800 °C.

In some embodiments, the first calcination and the second calcination may be performed alternately and repeatedly.

In some embodiments, when performing the first calcination and the second calcination, performing each of them once is together defined as a calcination cycle, at least two of the calcination cycles are performed.

A cathode for a lithium secondary battery according to exemplary embodiments includes a cathode active material layer including a cathode active material that includes lithium metal oxide particles having a predetermined shape/crystal structure, and satisfying Formula 1. Accordingly, a lithium secondary battery having high-capacity and high-power properties, improved life-span propertied and high-temperature stability may be provided.

BRIEF DESCRIPTION OF THE DRAWINGS

FIG. 1 is a schematic cross-sectional view of a cathode for a lithium secondary battery in accordance with exemplary embodiments.

FIG. 2 is a flow diagram schematically describing a method of preparing a cathode active material for a lithium secondary battery in accordance with exemplary embodiments.

FIGS. 3 and 4 are a schematic plan projection view and a cross-sectional view, respectively, illustrating a lithium secondary battery in accordance with exemplary embodiments.

FIG. 5 is an image obtained by analyzing a cross-section of a cathode according to Example 1 using a focused ion beam (FIB).

DETAILED DESCRIPTION OF THE EMBODIMENTS

According to embodiments of the present disclosures, a cathode for a lithium secondary battery containing lithium metal oxide particles having a predetermined shape and crystal structure is provided. According to further embodiments of the present disclosures, a method of preparing the cathode active material and a lithium secondary battery including the cathode are also provided.

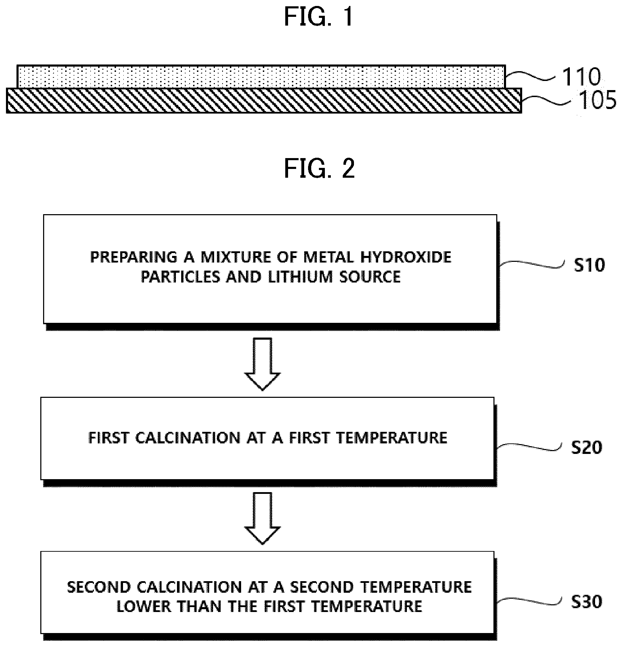

FIG. 1 is a schematic cross-sectional view of a cathode for a lithium secondary battery in accordance with exemplary embodiments.

Referring to FIG. 1, a cathode for a lithium secondary battery according to embodiments of the present disclosures includes a cathode current collector 105 and a cathode active material layer 110 formed on the cathode current collector 105.

For example, the cathode active material layer 110 may be formed on one surface or both surfaces of the cathode current collector 105.

The cathode active material layer 110 may include lithium metal oxide particles as a cathode active material. In some embodiments, the cathode active material layer 110 may further include a conductive material and a binder.

In exemplary embodiments, the cathode active material layer 110 may include lithium metal oxide particles having a shape of a single particle.

A single particle can be morphologically distinguished from a secondary particle. For example, the single particle and the secondary particle may be classified based on a cross-sectional image of the particle measured by a scanning electron microscope (SEM).

For example, the secondary particle may refer to a particle that is substantially considered or observed as one particle by aggregation of a plurality of primary particles. For example, a boundary of the primary particles in the case of the secondary particle can be observed by the SEM cross-sectional image.

For example, the secondary particle may be an aggregate of more than 10, 30, 50, or 100 primary particles.

For example, the single particle may refer to a monolith rather than the aggregate. In the case of single particles, in particular the boundaries of the primary particles are not observed in the SEM cross-sectional image.

Fine particles (e.g., particles having a volume of 1/100 or less of a volume of the single particle) may be attached to a surface of the single particle, and this shape is not excluded from the concept of the single particle.

For example, the single particles may exist in contact with each other. For example, 2 to 10, 2 to 5, or 2 to 3 single particles may exist in contact with each other.

In exemplary embodiments, the lithium metal oxide particles having the single-particle shape may have a single-crystalline structure or a poly-crystalline structure in a crystallographic aspect.

If the single particle has the single-crystalline structure, the single particle may consist of one single crystal. If the single particle has the poly-crystalline structure, the single particle may include two or more single crystals.

For example, the single-crystalline structure and the poly-crystalline structure may be classified based on an ion image obtained by analyzing a cross-section of a particle by a focused ion beam (FIB). If a particle has the poly-crystalline structure, two or more single crystals may be observed in the FIB analysis image according to a difference in crystal orientation. For example, even though a particle is observed as a single particle in an SEM cross-sectional image, the particle may be observed as being formed of two or more crystals in an FIB analysis image.

When conventional lithium metal oxide particles having the shape of secondary particles are used as the cathode active material, the life-span properties and high-temperature stability of the lithium secondary battery may be relatively degraded. When conventional lithium metal oxide particles having the shape of the single particle are used as the cathode active material, the life-span properties and high-temperature stability of the lithium secondary battery may be improved, but capacity and power properties may be relatively degraded.

According to embodiments of the present disclosures, an average value of a crystal size ($S_{FIB}$) of the single crystals measured from the FIB image of a cross-section of the cathode active material layer 110 may be adjusted in a range from 1 $\mu$m to 3 $\mu$m. Accordingly, a lithium secondary battery having high-capacity and high-power properties, improved life-span properties and high-temperature stability may be implemented.

In some embodiments, the $S_{FIB}$ may be calculated only for single crystals having at least one of a major axis length and a minor axis length (i.e., the major axis length and/or the minor axis length) of 0.3 $\mu$m or more. For example, a single crystal having a major axis length and a minor axis length of less than 0.3 $\mu$m may be excluded from the $S_{FIB}$ calculation. In this case, when deriving the average value, fine-sized single crystals that may greatly contribute to the average calculation may be excluded.

Accordingly, the $S_{FIB}$ calculation may target only the single crystals that contribute more to the improvement of the life-span properties and high-temperature stability.

In some embodiments, $S_{FIB}$ can be represented by S/N, and S/N can satisfy Formula 1.

[Formula 1]

$$1 \ \mu m \leq S/N \leq 3 \ \mu m$$

In Formula 1, N is a total number of single crystals in which at least one of a major axis length and a minor axis length is 0.3 $\mu$m or more measured from the FIB analysis image.

S is a total sum of crystal sizes of the single crystals in which at least one of the major axis length and the minor axis length is 0.3 $\mu$m or more measured from the FIB analysis image.

The crystal size of the single crystal means an average value of the length of the major axis and the length of the minor axis (i.e., as expressed in Formula 1-2 below), measured from the FIB analysis image.

[Formula 1-2]

Crystal size of single crystal = (major axis length of single crystal + minor axis length of single crystal)/2

The length of the major axis of the single crystal may mean a length of the longest line among straight lines having both end points at a circumference or contour of the single crystal in the FIB image. The length of the minor axis of the single crystal may mean a length of the shortest line among straight lines having both end points at the circumference or contour of the single crystal in the FIB image and intersecting a central point of the major axis of the single crystal. This means that the major axis and the minor axis lie in the same plane, wherein the latter insects the former at a central point but not necessarily at a right angle. The circumference or contour of the single crystal in the FIB image corresponds to the boundary surface of the single crystal.

For example, when the $S_{FIB}$ is less than 1 $\mu$m, the life-span properties and high-temperature stability of the lithium secondary battery may be deteriorated. If the $S_{FIB}$ exceeds 3 $\mu$m, the capacity and power properties of the lithium secondary battery may be deteriorated.

In some embodiments, $S_{FIB}$ = S/N may be in a range from 1 $\mu$m to 2.5 $\mu$m, from 1 $\mu$m to 2 $\mu$m, from 1 $\mu$m to 1.6 $\mu$m, from 1 $\mu$m to 1.5 $\mu$m, from 1.1 $\mu$m to 1.5 $\mu$m, or from 1.2 $\mu$m to 1.5 $\mu$m. Within the above ranges, the capacity and power properties of the lithium secondary battery may be maintained at a higher level, and the life-span properties and high-temperature stability may be further improved.

$S_{FIB}$ may be distinguished from a crystallite size ($S_{XRD}$) of a single crystal in the lithium metal oxide particles calculated according to an X-ray diffraction spectroscopy (XRD).

In some embodiments, the $S_{XRD}$ value of the lithium metal oxide particles may be 200 nm or more, 250 nm or more, 300 nm or more, or 500 nm or more. Further, the $S_{XRD}$ value may be 1,000 nm or less, 900 nm or less, or 800 nm or less.

In some embodiments, in the FIB analysis image, a ratio of a total cross-sectional area of single crystals in which at least one of the major axis length and the minor axis length is 0.3 $\mu$m or more relative to a total cross-sectional area of the lithium metal oxide particles may be 0.5 or more, 0.6 or more, 0.7 or more, or 0.8 or more.

In some embodiments, the lithium metal oxide particles may include first lithium metal oxide particles having the single-particle shape and the polycrystalline structure.

In some embodiments, the lithium metal oxide particles may include a second lithium metal oxide particle having the single-particle shape and the single-crystal structure.

In some embodiments involving the first and second lithium metal oxide particles, in the FIB analysis image, a ratio of the number of the second lithium metal oxide particles relative to the number of the first lithium metal oxide particles may be in a range from 0.1 to 10, from 0.2 to 8, from 0.3 to 6, or from 0.5 to 5.

In some embodiments, the lithium metal oxide particles may satisfy Formula 2. In this case, an excessive increase of a lithium diffusion path may be prevented, and the power properties of the lithium metal oxide particles may be further improved.

[Formula 2]

$$9.8\% \geq 100 \times I(110)/\{I(110)+I(003)\}$$

In Formula 2, I(110) is a maximum height of a (110) plane peak in an X-ray diffraction (XRD) analysis spectrum of the lithium metal oxide particles, and I(003) is a maximum height of a (003) plane peak in the XRD analysis spectrum.

In some embodiments, the values of $100 \times I(110)/\{I(110)+I(003)\}$ may be 1 or more, 2 or more, 3 or more, 4 or more, or 5 or more. Within the above ranges, a cation mixing phenomenon generated in the lithium metal oxide particles may be further suppressed, and capacity deterioration of the lithium secondary battery may be further prevented.

The lithium metal oxide particles may contain nickel (Ni). In some embodiments, the lithium metal oxide particles may further include cobalt (Co), manganese (Mn), aluminum (Al), etc.

In some embodiments, the lithium metal oxide particles may contain 80 mol% or more, 85 mol% or more, 88 mol% or more, or 90 mol% or more of nickel among all elements except lithium and oxygen.

In some embodiments, the cathode for a secondary lithium battery may satisfy Formula 3.

[Formula 3]

$$C \geq 140 + 0.738 \times Ni_C$$

In Formula 3, C is a numerical value of a discharge capacity expressed in a unit of mAh/g measured by CC/CV charging (0.1C 4.3V 0.05C CUT-OFF) and discharging (0.1C 3V CUT-OFF) of a half-cell having a lithium counter electrode. $Ni_C$ is a numerical value of mol% of nickel relative to the total number of moles of all elements except lithium and oxygen in the lithium metal oxide particles. "CC" means "constant current". "CV" means "constant voltage".

In some embodiments, the inequality $C \geq 150 + 0.738 \times Ni_C$, or the inequality $C \geq 155 + 0.738 \times Ni_C$ applies.

In some embodiments, the lithium metal oxide particles may be represented by Chemical Formula 1.

[Chemical Formula 1]     $Li_xNi_{(1-a-b)}M1_aM2_bO_y$

In Chemical Formula 1, M1 and M2 may each include at least one of Co, Mn, Al, Zr, Ti, Cr, B, Mn, Ba, Si, Y, W and Sr, $0.9 \leq x \leq 1.2$, $1.9 \leq y \leq 2.1$, and $0 \leq a+b \leq 0.2$.

In some embodiments, the inequality $0 < a+b \leq 0.15$, the inequality $0 < a+b \leq 0.12$, or the inequality $0 < a+b \leq 0.1$ applies.

In some embodiments, the lithium metal oxide particles may further contain a doping element. For example, the doping element may include Al, Ti, Ba, Zr, Si, B, Mg, P, Sr, W, La, etc.

In some embodiments, the cathode active material may further include a coating layer formed on at least a portion of a surface of the lithium metal oxide particle. For example, the coating layer may contain Al, Ti, Ba, Zr, Si, B, Mg, P, Sr, W, La, etc.

In some embodiments, the cathode active material layer 110 may further include third lithium metal oxide particles having a shape of a secondary particle under a condition where Formula 1 is satisfied.

In some embodiments, a content of the single-particle-shaped lithium metal oxide particles (i.e. the lithium metal oxide particles having the single-particle shape) may be 50 weight percent (wt%) or more, 60 wt% or more, 70 wt% or more, or 80 wt% or more based on a total weight of the cathode active material layer 110.

In one embodiment, the cathode current collector 105 may include stainless steel, nickel, aluminum, titanium, copper, or an alloy thereof.

The cathode binder, which may be included in the cathode active material layer 110, may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

The conductive material, which may be included in the cathode active material layer 110, may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

FIG. 2 is a flow diagram schematically describing a method of preparing a cathode active material for a lithium secondary battery in accordance with exemplary embodiments.

Referring to FIG. 2, a mixture of metal hydroxide particles and a lithium source may be prepared (e.g., in a phase of S10).

In exemplary embodiments, a reaction solution (e.g., an aqueous solution) including a metal salt, a chelating agent and a coprecipitation agent may be prepared. The metal hydroxide particles may be prepared by performing a coprecipitation reaction in the reaction solution.

In some embodiments, the metal salt may include a metal acetate, a metal sulfate, a metal nitrate, a metal hydroxide, a metal carbonate, a hydrate thereof, etc. The metal salt may include Ni, Co, Mn, Al, Zr, Ti, Cr, B, Mg, Mn, Ba, Si, Y, W, Sr, etc.

In some embodiments, the metal salt may contain nickel. The metal salt may further contain cobalt, manganese, aluminum, etc.

For example, a plurality types of the metal salts may be prepared so that the lithium metal oxide particles to be prepared satisfy the composition (components and molar ratios of the components) of Chemical Formula 1 above.

For example, the co-precipitating agent may include sodium hydroxide, sodium carbonate, etc. For example, the chelating agent may include aqueous ammonia, ammonium carbonate, etc.

A temperature of the co-precipitation reaction may be appropriately adjusted according to common technical knowledge in the related art.

The lithium source may include lithium hydroxide, lithium carbonate, lithium nitrate, lithium acetate, lithium oxide, etc.

The mixture may be calcined to form lithium metal oxide particles.

In some embodiments, the calcination may be performed for 8 hours to 30 hours, 10 hours to 25 hours, or 12 hours to 20 hours.

According to embodiments of the present disclosures, the calcination may include two or more calcination sections for firing the mixture while maintaining a predetermined temperature for a predetermined time. These calcination sections may also be referred to as "first calcination", "second calcination", etc.

The calcination of the mixture may include a first calcination performed at a first temperature (e.g., in a phase of S20), and a second calcination performed at a second temperature lower than the first temperature for the mixture after the first calcination (e.g., in a phase of S30).

For example, the first temperature may be a temperature at which the single-particle-shaped lithium metal oxide particles may be formed, and the single-particle-shaped lithium metal oxide particles may be formed by the first calcination.

In some embodiments, the first temperature may be in a range from 900 °C to 1000 °C.

In some embodiments, the second temperature may be in a range from 600 °C to 800 °C.

In some embodiments, the first calcination may include firing while maintaining a temperature range of $\pm 20$ °C ($\pm 15$ °C, or $\pm 10$ °C in some embodiments) from the first temperature for a predetermined time.

For example, the first calcination may be performed for 1 hour or more, 1 hour to 10 hours, 1 hour to 8 hours, 1 hour to 6 hours, 1 hour to 5 hours, or 1 hour to 3 hours.

In some embodiments, the second calcination may include firing while maintaining a temperature range of $\pm 20$ °C ($\pm 15$ °C, or $\pm 10$ °C in some embodiments) from the second temperature for a predetermined time.

For example, the second calcination may be performed for 1 hour or more, 1 hour to 10 hours, 1 hour to 8 hours, 1 hour to 6 hours, 1 hour to 5 hours, or 1 hour to 3 hours.

A generation degree of crystal nuclei and a growth of crystals in the lithium metal oxide particles may be controlled by the first calcination and the second calcination. Accordingly, an average value of crystal sizes of single crystals included in the lithium metal oxide particles may be adjusted within a predetermined range.

For example, when the lithium metal oxide particles are analyzed by the FIB so that 50 or more, 100 or more, 300 or more, or 500 or more particle cross-sections are measured, an average crystal size of the single crystals (provided that single crystals having the major axis length or the minor axis length of less than 0.3 $\mu$m are excluded) may be in a range from 1 $\mu$m to 3 $\mu$m, from 1 $\mu$m to 2.5 $\mu$m, from 1 $\mu$m to 2 $\mu$m, from 1 $\mu$m to 1.6 $\mu$m, from 1 $\mu$m to 1.5 $\mu$m, from 1.1 $\mu$m to 1.5 $\mu$m, or from 1.2 $\mu$m to 1.5 $\mu$m.

When only the second calcination is performed, the single-particle-shaped lithium metal oxide particles may not be formed or may be formed in an excessively small amount. Further, when only the first calcination is performed, the average crystal size of the single crystals included in the lithium metal oxide particles may not satisfy the above numerical range.

In some embodiments, the first calcination and the second calcination may be alternately and repeatedly performed. For example, the first calcination, the second calcination and the first calcination may be sequentially performed.

In some embodiments, when performing the first calcination and the second calcination, performing each of them once is together defined as a calcination cycle, the calcination cycle may be performed at least twice. In this case, the average crystal size of the single crystals may be more easily adjusted within the above-described numerical range.

In some embodiments, the first calcination and the second calcination may be alternately and repeatedly performed. In this case, a total calcination time may be from 8 hours to 30 hours, from 10 hours to 25 hours, or from 12 hours to 20 hours.

In some embodiments, a heating rate to the first temperature for the first calcination may be from 1 °C/min to 5 °C/min. In some embodiments, a cooling rate from the first temperature to the second temperature for the second calcination may be from 1 °C/min to 5 °C/min.

For example, a cathode slurry may be prepared by dispersing the lithium metal oxide particles prepared by the first calcination and the second calcination in a dispersion medium. The cathode slurry may further include the conductive material, the binder, etc.

The cathode slurry may be coated on the cathode current collector 105, and then dried and pressed to form the cathode active material layer 110 satisfying Formula 1.

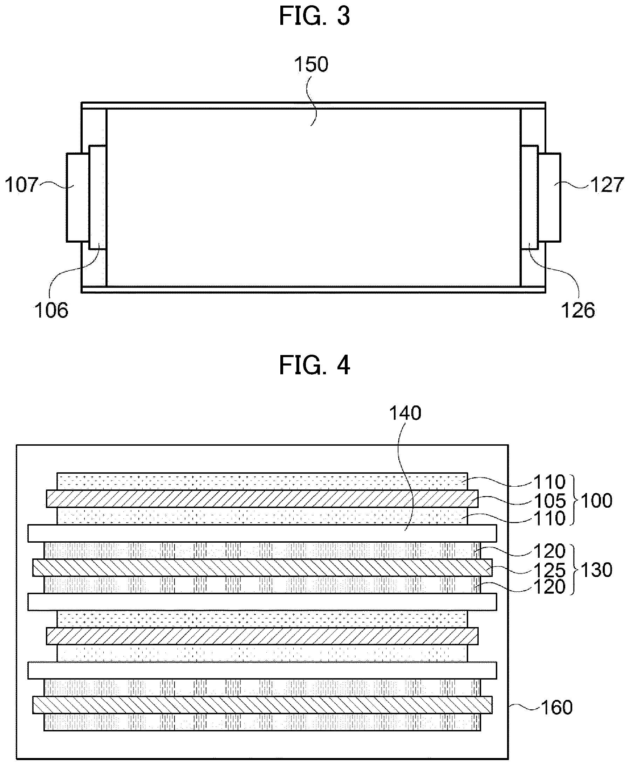

FIGS. 3 and 4 are a schematic plan projection view and a cross-sectional view, respectively, illustrating a lithium secondary battery in accordance with exemplary embodiments.

Referring to FIGS. 3 and 4, a lithium secondary battery includes a cathode 100 and an anode 130 facing the cathode 100.

The cathode 100 may be the above-described cathode for a lithium secondary battery.

The anode 130 may include an anode current collector 125 and an anode active material layer 120 formed on the anode current collector 125. For example, the anode active material layer 120 may be formed on one surface or both surfaces of the anode current collector 125.

The anode active material layer 120 may include an anode active material capable of reversibly intercalating and de-intercalating lithium ions. The anode active material layer 120 may further include a binder, a conductive material, etc.

For example, an anode slurry may be prepared by dispersing the anode active material, a binder, and a conductive material in a dispersion medium. The anode slurry may be coated on the anode current collector 125, and then dried and pressed to form the anode.

For example, the anode current collector 125 may include gold, stainless steel, nickel, aluminum, titanium, copper, or an alloy thereof.

The anode active material may include a lithium alloy, a carbon-based active material, a silicon-based active material, etc. These may be used alone or in a combination thereof.

For example, the lithium alloy may further include aluminum, zinc, bismuth, cadmium, antimony, silicon, lead, tin, gallium, indium, etc.

For example, the carbon-based active material may include a crystalline carbon, an amorphous carbon, a carbon composite, a carbon fiber, etc.

For example, the amorphous carbon may include, e.g., a hard carbon, coke, a mesocarbon microbead (MCMB), a mesophase pitch-based carbon fiber (MPCF), etc. The crystalline carbon may include, e.g., artificial graphite, natural graphite, graphitized coke, graphitized MCMB, graphitized MPCF, etc.

In some embodiments, the anode active material may include the silicon-based active material. The silicon-based active material may include, e.g., Si, $SiO_x$ (0<x<2), Si/C, SiO/C, Si-metal, etc. In this case, the lithium secondary battery having a high capacity may be implemented.

In some embodiments, an area of the anode 130 may be greater than that of the cathode 100. Accordingly, lithium ions generated may be easily transferred from the cathode 100 to the anode 130 without being precipitated.

For example, the cathode 100 and the anode 130 may be alternately and repeatedly disposed to form an electrode assembly 150.

A separation layer 140 may be interposed between the cathode 100 and the anode 130. For example, the electrode assembly 150 may be formed by winding, stacking or zigzag folding (z-folding) of the separation layer 140.

For example, the separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a non-woven fabric formed from a glass fiber with a high melting point, a polyethylene terephthalate fiber, etc.

The lithium secondary battery according to exemplary embodiments may include a cathode lead 107 connected to the cathode 100 to protrude to an outside of a case 160, and an anode lead 127 connected to the anode 130 to protrude to the outside of the case 160.

For example, the cathode lead 107 may be electrically connected to the cathode current collector 105. The anode lead 127 may be electrically connected to the anode current collector 125.

The cathode current collector 105 may include a cathode tab 106 at one side thereof. The cathode active material layer 110 may not be formed on the cathode tab 106. The cathode tab 106 may be integral with the cathode current collector 105 or may be connected to the cathode current collector 105 by, e.g., welding. The cathode current collector 105 and the cathode lead 107 may be electrically connected via the cathode tab 106.

The anode current collector 125 may include an anode tab 126 at one side thereof. The anode active material layer 120 may not be formed on the anode tab 126. The anode tab 126 may be integral with the anode current collector 125 or may be connected to the anode current collector 125 by, e.g., welding. The anode electrode current collector 125 and the anode lead 127 may be electrically connected via the anode tab 126.

The electrode assembly 150 may include a plurality of the cathodes and a plurality of the anodes. Each of the plurality of the cathodes may include the cathode tab. Each of the plurality of the anodes may include the anode tab.

For example, the cathode tabs (or the anode tabs) may be laminated, pressed and welded to form a cathode tab stack (or an anode tab stack). The cathode tab stack may be electrically connected to the cathode lead 107. The anode tab stack may be electrically connected to the anode lead 127.

The lithium secondary battery may be fabricated into a cylindrical shape using a can, a prismatic shape, a pouch shape, a coin shape, etc.

The electrode assembly 150 may be accommodated together with an electrolyte in the case 160 to form the lithium secondary battery. For example, the electrolyte may include a lithium salt and an organic solvent.

The lithium salt may be represented by $Li^+X^-$. For example, the anion $X^-$ may be at least one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

For example, the lithium salt may include $LiBF_4$, $LiPF_6$, etc.

For example, the organic solvent may include a carbonate-based solvent, an ester-based solvent, an ether-based solvent, a ketone-based solvent, an alcohol-based solvent, an aprotic solvent, and the like.

The carbonate-based solvent may include, e.g., dimethyl carbonate (DMC), ethyl methyl carbonate (EMC), diethyl carbonate (DEC), ethylene carbonate (EC), etc.

The ester-based solvent may include, e.g., methyl propionate, ethyl propionate, propyl acetate, butyl acetate, ethyl acetate, butyrolactone, caprolactone, valerolactone, etc.

The ether-based solvent may include, e.g., dibutyl ether, tetraethylene glycol dimethyl ether (TEGDME), diethylene glycol dimethyl ether (DEGDME), dimethoxyethane, tetrahydrofuran (THF), 2-methyltetrahydrofuran, etc.

The ketone-based solvent may include, e.g., cyclohexanone.

The alcohol-based solvent may include, e.g., ethyl alcohol, isopropyl alcohol, etc.

The aprotic solvent may include, e.g., a nitrile-based solvent, an amide-based solvent (e.g., dimethylformamide), a dioxolane-based solvent (e.g., 1,3-dioxolane), a sulfolane-based solvent, etc.

Examples and Comparative Examples

Example 1

(1) Preparation of Lithium Metal Oxide Particles

$NiSO_4$, $CoSO_4$ and $MnSO_4$ were added to distilled water from which dissolved oxygen had been removed by a molar ratio of 80:10:10 to prepare a mixed solution. The mixed solution, NaOH (precipitating agent) and $NH_4OH$ (chelating agent) were put into a reactor, and a co-precipitation was performed for 72 hours to prepare metal hydroxide particles ($Ni_{0.8}Co_{0.1}Mn_{0.1}(OH)_2$). The metal hydroxide particles were dried at 100 °C for 12 hours, and then further dried at 120 °C for 12 hours.

A mixture was prepared by adding lithium hydroxide and the dried metal hydroxide particles to a dry high-speed mixer so that the molar ratio became 1: 1.03.

The prepared mixture was put into a calcination furnace, and the furnace was raised to 950 °C at a rate of 2 °C/min, and a first calcination was performed while maintaining the temperature at 950 °C for 2 hours.

After the first calcination, a temperature of the calcination furnace was reduced to 800 °C at a rate of 2 °C/min, and a second calcination was performed while maintaining the temperature at 800 °C for 2 hours.

The first calcination and the second calcination were repeatedly performed by two cycles (i.e., the first calcination, the second calcination, the first calcination and the second calcination were sequentially performed). The last second calcination was carried out for 9 hours.

During the first calcination and the second calcination, an oxygen gas was continuously supplied through the calcination furnace at a flow rate of 10 mL/min.

After the second calcination, the product was naturally cooled to room temperature, and then pulverized and classified to obtain lithium metal oxide particles ($LiNi_{0.8}Co_{0.1}Mn_{0.1}O_2$).

(2) Fabrication of lithium secondary battery (coin half-cell)

The lithium metal oxide particles prepared in (1) as a cathode active material, carbon black as a conductive material and polyvinylidene fluoride (PVDF) as a binder were dispersed in N-methyl-2-pyrrolidone (NMP) by a weight ratio of 92:5:3, respectively to prepare a cathode slurry.

The prepared cathode slurry was coated on an aluminum foil (thickness of 15 $\mu$m), and then dried and pressed to obtain a cathode. A lithium metal was used as a counter electrode (anode).

The obtained cathode and the anode were each notched in a circular shape, and a circular polyethylene separator (thickness of 13 $\mu$m) was interposed between the cathode and the anode to prepare an electrode assembly.

The electrode assembly was placed in a coin-shaped casing and an electrolyte was injected to fabricate a coin-type lithium secondary battery. A 1M $LiPF_6$ dissolved in a mixed solvent of EC/EMC (30:70 v/v) was used as the electrolyte.

Example 2

The first calcination and the second calcination were performed once each (however, the second firing was performed for 14 hours) to prepare lithium metal oxide particles.

Apart from this difference, a lithium secondary battery was manufactured by the same method as that in Example 1 using the lithium metal oxide particles.

Comparative Example 1

A mixed solution was prepared by adding $NiSO_4$, $CoSO_4$ and $MnSO_4$ to distilled water from which dissolved oxygen had been removed by a molar ratio of 80:10:10, respectively. The mixed solution, NaOH and $NH_4OH$ were put into a reactor and co-precipitation was performed for 30 hours to prepare metal hydroxide particles $(Ni_{0.8}Co_{0.1}Mn_{0.1}(OH)_2)$. The metal hydroxide particles were dried at 80 °C for 12 hours, and further dried at 110 °C for 12 hours.

A mixture was prepared by adding lithium hydroxide and the dried metal hydroxide particles to a dry high-speed mixer so that the molar ratio became 1:1.03.

The prepared mixture was put into a calcination furnace, and the furnace was raised to 700 °C at a rate of 2 °C/min, and a first calcination was performed while maintaining the temperature at 700 °C for 15 hours. During the calcination, an oxygen gas was continuously supplied through the calcination furnace at a flow rate of 10 mL/min.

After the calcination, the product was naturally cooled to room temperature, and then pulverized and classified to obtain lithium metal oxide particles $(LiNi_{0.8}Co_{0.1}Mn_{0.1}O_2)$.

A lithium secondary battery was manufactured by the same method as that in Example 1 but using the lithium metal oxide particles of Comparative Example 1.

Comparative Example 2

A calcination was performed at 950 °C for 10 hours without being divided into the first calcination and the second calcination to prepare lithium metal oxide particles.

A lithium secondary battery was manufactured by the same method as that in Example 1 but using the lithium metal oxide particles of Comparative Example 2.

Comparative Example 3

A calcination was performed was performed at 750 °C for 10 hours without being divided into the first calcination and the second calcination to prepare lithium metal oxide particles.

A lithium secondary battery was manufactured by the same method as that in Example 1 but using the lithium metal oxide particles of Comparative Example 3.

Experimental Example 1

(1) Crystal Size ($S_{XRD}$) Analysis

100 particles were randomly extracted and sampled from the lithium metal oxide particles of each of Examples and Comparative Examples. The sampled lithium metal oxide particles were analyzed by an XRD (X-ray diffraction) to measure a crystal size ($S_{XRD}$).

XRD analysis equipment and conditions are shown in Table 1 below.

[Table 1]

| XRD(X-Ray Diffractometer) EMPYREAN | |
|---|---|
| Manufacturer | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

(2) XRD Spectrum Analysis

A ratio of a (110) plane peak and a (003) plane peak (hereinafter referred to as am XRD peak ratio) in the XRD analysis spectrum was measured according to Formula 2-1 below.

[Formula 2-1]

XRD peak ratio (%) = 100×I(110)/{I(110)+I(003)}

In Formula 2-1, I(110) is a maximum height of the (110) plane peak, and I(003) is a maximum height of the (003) plane peak.

Experimental Example 2

(1) Morphology and Crystal structure analysis

Cross-sections of the cathode active material layer of the lithium secondary batteries of Examples and Comparative Examples were analyzed using a Scanning Electron Microscope (SEM) and a Focused Ion Beam (FIB).
In Examples 1 and 2 and Comparative Examples 2 and 3, lithium metal oxide particles having a shape of a single particle and a polycrystalline structure as well as lithium metal oxide particles having a shape of a single particle and a single-crystalline structure were mixed.
The lithium metal oxide particles of Comparative Example 1 had a shape of a secondary particle.

(2) Average Value ($S_{FIB}$) Analysis of Crystal Size of Single Crystals

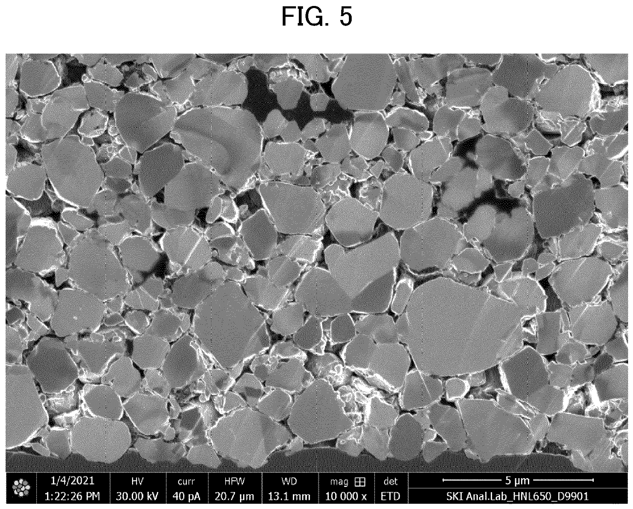

FIG. 5 is an image obtained by analyzing a cross-section of a cathode according to Example 1 using a focused ion beam (FIB).
In the FIB analysis image, an average value (SFIB) of crystal sizes of single crystals was measured. FIB was measured according to Formula 1-1 below.

[Formula 1-1]

$S_{FIB}=S/N$

In Formula 1-1, N is a total number of the single crystals in which at least one of a major axis length and a minor axis length was 0.3 $\mu$m or more measured from the FIB analysis image. S is a total sum of the crystal sizes of the single crystals in which at least one of the major axis length and the minor axis length was 0.3 $\mu$m or more measured from the FIB analysis image.
The crystal size of the single crystal means an average value of the major axis length and the minor axis length.

Experimental Example 3

(1) Evaluation of Room Temperature Discharge Capacity

The lithium secondary batteries of Examples 1-2 and Comparative Examples 1-3 were repeatedly subjected to CC/CV charging (0.1C 4.3V, 0.05C CUT-OFF) and CC discharging (0.1C 3.0V CUT-OFF) at 25 °C twice, and a discharge capacity C1 was measured at the 2nd cycle. Herein, "CC" means "constant current" and "CV" means "constant voltage".

(2) Evaluation of High-Temperature Life-span Property (Capacity Retention)

The lithium secondary batteries of Examples and Comparative Examples were CC/CV charged (1C 4.2V 0.05C CUT-OFF) and CC discharged (1C 2.7V CUT-OFF) at 45 °C.
The charge and the discharge were repeatedly performed 400 times, and a discharge capacity C2 was measured at the 400th cycle.
A high-temperature capacity retention was calculated according to Formula 4 below.

[Formula 4]

High-Temperature Capacity Retention (%) = C2/C1×100 (%)

(3) Evaluation of High-Temperature Storage Gas Generation

Lithium secondary batteries of Examples 1-2 and Comparative Examples 1-3 were CC/CV charged (1C 4.2V 0.1C CUT-OFF), and then stored in a constant temperature chamber at 60 °C for 8 weeks.

After the 8 weeks, each lithium secondary battery was placed in a vacuum sealed chamber equipped with a pressure gauge, and a hole was formed at a bottom of an exterior material of the lithium secondary battery. An amount of gas generation was calculated by measuring a pressure change in the chamber.

The results are shown in Tables 2 and 3.

[Table 2]

| | | lithium metal oxide particles | $S_{XRD}$ (nm) | $S_{FIB}$ ($\mu$m) | XRD peak ratio (%) |
|---|---|---|---|---|---|
| | Example 1 | single-particle & poly-crystalline + single-particle & single-crystalline | 325 | 1.37 | 9.7 |
| | Example 2 | single-particle & poly-crystalline + single-particle & single-crystalline | 340 | 1.66 | 9.3 |
| | Comparative Example 1 | secondary particle (poly-crystalline) | 130 | - | 10.1 |
| | Comparative Example 2 | single-particle & poly-crystalline + single-particle & single-crystalline | 256 | 0.94 | 9.8 |
| | Comparative Example 3 | single-particle & poly-crystalline + single-particle & single-crystalline | 255 | 0.8 | 7.5 |

[Table 3]

| | discharge capacity (mAh) | high temperature capacity retention (%) | high temperature gas generation (ml) |
|---|---|---|---|
| Example 1 | 212 | 88 | 21 |
| Example 2 | 210 | 86 | 27 |
| Comparative Example 1 | 215 | 71 | 45 |
| Comparative Example 2 | 213 | 84 | 32 |
| Comparative Example 3 | 214 | 83 | 33 |

Referring to Table 3, the lithium secondary batteries of Examples provided a high level of the discharge capacity and improved high-temperature stability compared to those from the lithium secondary batteries of Comparative Examples.

**Claims**

1. A cathode (100) for a lithium secondary battery, comprising:

   a cathode current collector (105); and
   a cathode active material layer (110) formed on the cathode current collector (105), the cathode active material layer (110) comprising lithium metal oxide particles that have a single-particle shape and a single-crystalline structure or a poly-crystalline structure including two or more single crystals,
   wherein the cathode active material layer (110) satisfies Formula 1:

[Formula 1]

$$1 \ \mu m \le S/N \le 3 \ \mu m,$$

wherein, in Formula 1, N is a total number of single crystals in which at least one of a major axis length and a minor axis length is 0.3 $\mu$m or more in a focused ion beam (FIB) analysis image of the cathode active material layer (110),

S is a total sum of crystal sizes of the single crystals in which at least one of the major axis length and the minor axis length is 0.3 $\mu$m or more in the FIB analysis image, and

the crystal size of the single crystal means an average value of the major axis length and the minor axis length measured from the FIB analysis image.

2. The cathode (100) for a lithium secondary battery according to claim 1, wherein $1\mu m \le S/N \le 2\mu m$.

3. The cathode (100) for a lithium secondary battery according to claim 1 or claim 2, wherein, in the FIB analysis image, a ratio of a total cross-sectional area of the single crystals in which at least one of the major axis length and the minor axis length is 0.3 $\mu$m or more relative to a total cross-sectional area of the lithium metal oxide particles is 0.5 or more.

4. The cathode (100) for a lithium secondary battery according to any one of claims 1 to 3, wherein the lithium metal oxide particles comprise:

first lithium metal oxide particles having a single-particle shape and a poly-crystalline structure; and
second lithium metal oxide particles having a single-particle shape and a single-crystalline structure.

5. The cathode (100) for a lithium secondary battery according to claim 4, wherein, in the FIB analysis image, a ratio of the number of the second lithium metal oxide particles relative to the number of the first lithium metal oxide particles is in a range from 0.1 to 10.

6. The cathode (100) for a lithium secondary battery according to any one of claims 1 to 5, wherein the lithium metal oxide particles satisfy Formula 2:

[Formula 2]

$$9.8\% \ge 100 \times I(110)/\{I(110)+I(003)\}$$

wherein, in Formula 2, I(110) is a maximum height of a (110) plane peak in an X-ray diffraction (XRD) analysis spectrum measured for the lithium metal oxide particles, and I(003) is a maximum height of a (003) plane peak in the XRD analysis spectrum.

7. The cathode (100) for a lithium secondary battery according to any one of claims 1 to 6, wherein the lithium metal oxide particles contain nickel (Ni).

8. The cathode (100) for a lithium secondary battery according to claim 7, wherein Formula 3 is satisfied:

[Formula 3]

$$C \ge 140 + 0.738 \times Ni_C$$

wherein, in Formula 3, C is a numerical value of a discharge capacity expressed in a unit of mAh/g measured by charging under constant current and constant voltage conditions of 0.1C 4.3V 0.05C CUT-OFF, and discharging under conditions of 0.1C 3V CUT-OFF of a half-cell having a lithium counter electrode, and

$Ni_C$ is a numerical value of mol% of nickel relative to a total number of moles of all elements except lithium and oxygen in the lithium metal oxide particles.

9. A lithium secondary battery, comprising:

   the cathode (100) for a lithium secondary battery according to any one of claims 1 to 8; and
   an anode (130) facing the cathode (100).

10. A method of preparing a cathode active material for a lithium secondary battery, comprising:

    preparing a mixture of metal hydroxide particles and a lithium source;
    performing a first calcination of the mixture at a first temperature; and
    performing a second calcination of a product from the first calcination at a second temperature lower than the first temperature.

11. The method of claim 10, wherein the first calcination and the second calcination are each performed for 1 hour to 10 hours.

12. The method of claim 10 or claim 11, wherein the first temperature is in a range from 900 °C to 1000 °C.

13. The method of claim 12, wherein the second temperature is in a range from 600 °C to 800 °C.

14. The method of any one of claims 10 to 13, wherein the first calcination and the second calcination are performed alternately and repeatedly.

15. The method according to any one of claims 10 to 14, wherein at least two calcination cycles are performed, wherein performing the first calcination and the second calcination once each is defined as a calcination cycle.

## FIG. 1

110
105

## FIG. 2

PREPARING A MIXTURE OF METAL HYDROXIDE
PARTICLES AND LITHIUM SOURCE — S10

FIRST CALCINATION AT A FIRST TEMPERATURE — S20

SECOND CALCINATION AT A SECOND TEMPERATURE
LOWER THAN THE FIRST TEMPERATURE — S30

# FIG. 3

150

107

127

106

126

# FIG. 4

140

110
105  100
110

120
125  130
120

160

# FIG. 5

| 1/4/2021 | HV | curr | HFW | WD | mag ⊞ | det | ———— 5 µm ———— |
| 1:22:26 PM | 30.00 kV | 40 pA | 20.7 µm | 13.1 mm | 10 000 x | ETD | SKI Anal.Lab_HNL650_D9901 |

Europäisches
Patentamt

European
Patent Office

Office européen
des brevets

# EUROPEAN SEARCH REPORT

Application Number

EP 23 17 3885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/258365 A1 (YOKOYAMA SHOHEI [JP] ET AL) 11 October 2012 (2012-10-11) * page 10 - page 12 * ----- | 1-9 | INV. H01M4/505 H01M4/525 H01M10/0525 H01M10/0565 |
| X | LIU XIANGSI ET AL: "Electrochemo-Mechanical Effects on Structural Integrity of Ni-Rich Cathodes with Different Microstructures in All Solid-State Batteries", ADVANCED ENERGY MATERIALS, vol. 11, no. 8, 14 January 2021 (2021-01-14), XP093087238, DE ISSN: 1614-6832, DOI: 10.1002/aenm.202003583 Retrieved from the Internet: URL:https://onlinelibrary.wiley.com/doi/full-xml/10.1002/aenm.202003583> * abstract * ----- | 1-9 | |
| X | JP 2001 155727 A (HITACHI METALS LTD; HITACHI LTD) 8 June 2001 (2001-06-08) | 1-13 | TECHNICAL FIELDS SEARCHED (IPC) |
| A | * paragraph [0024] - paragraph [0026]; claim 6; table 1 * ----- | 14,15 | H01M |

The present search report has been drawn up for all claims

| Place of search | Date of completion of the search | Examiner |
|---|---|---|
| Munich | 29 September 2023 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 3885

This annex lists the patent family members relating to the patent documents cited in  the above-mentioned European search report.
The members are as contained in the European Patent Office EDP file on
The European Patent Office is in no way liable for these particulars which are merely given for the purpose of information.

29-09-2023

| Patent document cited in search report | Publication date | Patent family member(s) | Publication date |
|---|---|---|---|
| US 2012258365 A1 | 11-10-2012 | JP WO2012137535 A1<br>US    2012258365 A1<br>WO    2012137535 A1 | 28-07-2014<br>11-10-2012<br>11-10-2012 |
| JP 2001155727 A | 08-06-2001 | JP      4743804 B2<br>JP    2001155727 A | 10-08-2011<br>08-06-2001 |

EPO FORM P0459

For more details about this annex : see Official Journal of the European Patent Office, No. 12/82

**EP 4 280 303 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20210119905 A